# EUROPÄISCHE PATENTSCHRIFT

(11) **EP 2 514 872 B1**
(45) Veröffentlichungstag und Bekanntmachung des Hinweises auf die Patenterteilung: **22.07.2015**
(21) Anmeldenummer: 11003245.5
(22) Anmeldetag: 18.04.2011
(51) Int. Cl.: B60W 10/00, E01C 19/00, E01C 19/48

(54) **Strassenfertiger zum Einbauen eines Strassenbelags**
Paver for paving a road surface
Finisseuse de route pour le pavage des routes

(43) Veröffentlichungstag der Anmeldung: 24.10.2012
(73) Patentinhaber: Joseph Vögele AG, 67067 Ludwigshafen (DE)
(72) Erfinder: Rutz, Arnold, 67065 Ludwigshafen (DE); Buschmann, Martin, Dipl.-Ing., 67435 Neustadt (DE); Eul, Achim, 68305 Mannheim (DE); Weiser, Ralf, 68526 Ladenburg (DE)
(74) Vertreter: Grünecker Patent- und Rechtsanwälte PartG mbB

(56) Entgegenhaltungen:
- EP-A1- 1 755 008
- EP-A2- 1 544 354
- US-A1- 2006 045 620

## Beschreibung

Die Erfindung betrifft einen Straßenfertiger gemäß Oberbegriff des Patentanspruchs 1.

Um im Straßenbau weitgehend fehlerfrei und effektiv einen qualitativ hochwertigen Straßenbelag einzubauen, sind genaue Maschineneinstellungen am Straßenfertiger und dessen Einbaubohle erforderlich. Fehlerhafte Einstellungen bedeuten gegebenenfalls hohe Nachbearbeitungs- und/oder Materialkosten. Beispielsweise kann es bei einem Straßenbelag mit einem Querneigungsprofil bei falsch hergestelltem Profil vorkommen, dass eine zu große Menge an Einbaumaterial eingebaut oder das fehlerhafte Profil wieder ausgebaut und ersetzt werden muss. Üblich ist es, die Maschinenparameter durch das Personal vor Ort einzustellen und den Straßenfertiger entsprechend einzurichten, wobei die Effizienz des Straßenfertigers und die Qualität des dann eingebauten Straßenbelags von der Erfahrung des Personals abhängen und einigermaßen zufriedenstellende Effizienz und Straßenbelagsqualität beim Einbau erst nach einiger Zeit erzielt werden. Dazu kommt hoher Zeitaufwand für den Einrichtprozess, da eine Vielzahl unterschiedlicher Maschinenparameter eingestellt werden muss und Maschinenparameter einander gegenseitig nachhaltig beeinflussen können.

Unter anderem aus diesen Gründen hat sich ein Trend zu einem Baustellen-Management entwickelt, bei welchem moderne Möglichkeiten der Datenverarbeitung und DatenKommunikation genutzt werden, um die Maschineneffizienz und die Straßenbelagsqualität zu optimieren.

Aus EP 1 544 354 A ist ein gattungsgemäßer Straßenfertiger bekannt, der vor Einbaubeginn auf der Basis eines vorab erstellten, gespeicherten Parametersatzes voreingestellt wird. Der erstellte Parametersatz beruht auf früher gewonnenen Einstellungen, die bei bestimmten Gegebenheiten zu einem optimalen Arbeitsergebnis geführt hatten, und ist von einem mit der Steuerung des Straßenfertigers verknüpfbarem Messdatenerfassungssystem erstellt und gespeichert. Auf diese Weise entfällt eine Feineinstellung des Straßenfertigers oder reduziert sich die für eine Feineinstellung notwendige Arbeitszeit erheblich. Die Soll-Maschinenparameter des Parametersatzes können auf einem geeigneten Speichermedium abgespeichert sein, werden ausgelesen und dann in tatsächliche Einstellungen umgewandelt. Hierbei werden auch gespeicherte Maschineneffizenz- und Straßenbelagsqualitäts-Kennzahlen berücksichtigt. Bei der Voreinstellung werden Soll-Maschinenparameter von Hand und, wenn möglich, automatisch für die Steuerung umgesetzt.

Bei einem aus US 2006/0045620 A1 bekannten Verfahren werden beim Einbauen einer Deckenschicht mit einem Straßenfertiger fortlaufend mit einer am Straßenfertiger vorgesehenen Sensorik zumindest mit Höhensensoren Höhenabstände zum Planum vor dem Straßenfertiger und Höhenabstände zur Oberseite der Deckenschicht hinter dem Straßenfertiger gemessen und wird aus einer Differenz der Höhenabstände die Dicke der eingebauten Deckenschicht ermittelt. Ein Kontroller der Steuerung verarbeitet die Messresultate und die gemessene Dicke im Vergleich zu einer voreingestellten Solldicke der Deckenschicht und veranlasst Nachstellungen der Nivellierzylinder und der Verteilerschnecke, falls die gemessene Dicke von der Solldicke abweicht, und so lange, bis die gemessene Dicke wieder mit der Solldicke übereinstimmt. Eine Voreinstellung des Straßenfertigers vor Einbaubeginn ist über den Kontroller nicht möglich, da die Haupt-Regelgröße der Deckenschicht-Dichte noch nicht existiert.

Aus DE 60 2004 011 968 T ist ein Informationsaustauschsystem für Baustellen bekannt. Zwischen mobilen Baufahrzeugen und einem Planungsbüro erfolgt beispielsweise unter Nutzen eines Internet-Protokolls ein Datenaustausch zum geführten Fahren der Baufahrzeuge.

Aus DE 101 51 942 B ist ein Baumaschinen-Managementsystem bekannt, bei welchem Baumaschinen untereinander und mit einem Planungsbüro kommunizieren. Die kommunizierten Daten umfassen beispielsweise Diebstahlinformationen, Projektkosten, Teile- und Materialbedarfsvorhersagen, Wartungsbedarfsvorhersagen, Wetterdaten oder Kraftstoffverbrauch, ohne jedoch Maschinenparameter einzubeziehen, die beispielsweise ein Straßenfertiger besonders für einen effizienten Betrieb und zur Herstellung eines hochqualitativen Straßenbelags benötigen würde.

Der Erfindung liegt die Aufgabe zugrunde, einen Straßenfertiger dahingehend zu verbessern, dass das Voreinstellen des Straßenfertigers unabhängig von Erfahrungen oder Einflüssen des Personals zügig vorzunehmen ist, der Einbauprozess möglichst rasch mit hoher Effizienz durchführbar ist und weitestgehend ab Einbaubeginn ein qualitativ hochwertiger und den Vorgaben auf der Baustelle entsprechender Straßenbelag eingebaut wird.

Die gestellte Aufgabe wird mit den Merkmalen des Patentanspruchs 1 gelöst.

Im Straßenfertiger lassen sich über die Steuerung bzw. den Bordrechner auf der Basis des vorab erstellten Parametersatzes die entscheidenden Maschinenparameter, wie zumindest die Höhenpositionen der Nivellierzylinder automatisch voreinstellen, um den Einbau mit hoher Maschineneffizienz und hoher Straßenbelagsqualität umgehend beginnen und zügig ablaufen lassen zu können. Es werden Ist-Höhenpositionen der Nivellierzylinder als Ist-Maschinenparameter über die Sensorik ermittelt, mit Höhenpositionen der Nivellierzylinder im vorab erstellten Parametersatz verglichen, und die Höhenpositionen der Nivellierzylinder aus dem vorab erstellten Parametersatz unter Ansteuern der hydraulischen Aktorik automatisch umgesetzt. Dabei kann der Parametersatz am Straßenfertiger erstellt und umgesetzt werden, oder an einer Erstellungsstelle erstellt werden, an der genügend aussagefähige Informationen verfügbar sind, um den Parametersatz möglichst passend zu erstellen und dann entweder in den Bordrechner des Straßenfertigers einzugeben oder dorthin zu überspielen. Mit dem vorab erstellten Parametersatz sind zumindest die Höhenpositionen der Nivellierzylinder des Straßenfertigers definiert. Da im Regelfall am Straßenfertiger bereits bestimmte Grundeinstellungen vorliegen, werden zum Abgleich mit den Soll-Maschinenparametern des vorab erstellten Parametersatzes Ist-Maschinenparameter über die Sensorik am Straßenfertiger ermittelt und berücksichtigt, um den Voreinstellungsprozess zu vereinfachen. Die Soll-Maschinenparameter des vorab erstellten Parametersatzes werden im Straßenfertiger ausgelesen und über die Aktorik hydraulisch automatisch und korreliert mit den erfassten Ist-Maschinenparametern umgesetzt. Hierbei werden über die hydraulische Aktorik zumindest der Anstellwinkel der Einbaubohle an den Nivellierzylindern bzw. an den Nivellierzylindern unterschiedliche Höhenpositionen von Anlenkpunkten der Zugholme der Einbaubohle für einen Straßenbelag mit quer zur Einbaufahrtrichtung variierender Einbaustärke eingestellt. Das Personal am Straßenfertiger kann diese automatisch ablaufenden Einstellungen zwar überwachen, braucht jedoch nicht einzugreifen.

Bei einer zweckmäßigen Ausführungsform ist im Straßenfertiger eine Sende-/Empfangs-Sektion vorgesehen und kommunikationsfähig mit einem Telematik-Modul verknüpft, das vom Straßenfertiger getrennt platziert oder sogar auf dem Straßenfertiger angeordnet ist. Zweckmäßig befindet sich das Telematik-Modul in einem Planungsbüro oder einem Verwaltungsserver.

Ferner kann es zweckmäßig sein, vorab mehrere unterschiedliche Parametersätze zu erstellen und abrufbar zu speichern, vorzugsweise in der Steuerung bzw. dem Bordrechner des jeweiligen Straßenfertigers, oder in einem mit dem Straßenfertiger kommunizierenden Verwaltungsserver. Auf diese Weise ist ein jeweils passender Parametersatz schnell abrufbar und verfügbar.

Anhand der Zeichnungen werden Ausführungsformen des Erfindungsgegenstandes erläutert. Es zeigen:
- Fig. 1: einen Querschnitt eines einzubauenden Straßenbelags auf einer Baustelle,
- Fig. 2: ein Schaubild eines Bordrechners eines Straßenfertigers mit zugeordnetem Telematikmodul, und
- Fig. 3: eine Schemadarstellung einer Baustelle, auf der beispielsweise zwei Straßenfertiger Straßenbeläge einbauen, und der ein Planungsbüro zugeordnet ist.

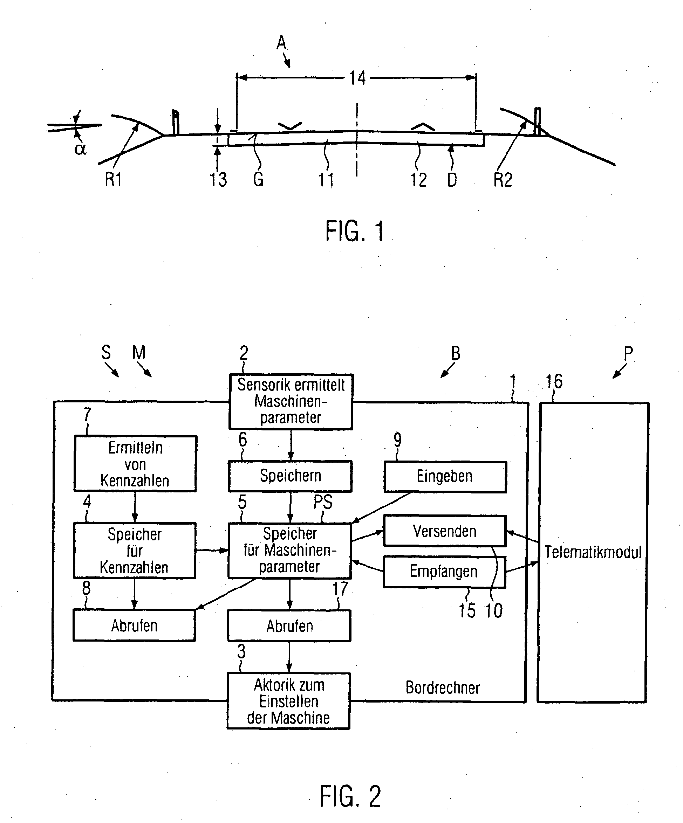

Ein Straßenbelag D in Fig. 1, der spezielle Einbauanforderungen zu erfüllen hat, weist ein Dachprofil mit zwei in der Mitte aneinanderstoßenden, unterschiedlich geneigten Sektionen 11, 12 jeweils mit z.B. einer Einbaustärke 13 auf, wobei die insgesamte Einbaubreite mit 14 bezeichnet ist. Der Straßenbelag D ist z.B. unter einem Winkel a quergeneigt und kann einem Kurvenverlauf R1, R2 mit unterschiedlichen Radien folgen. Ferner sind gegebenenfalls Gullys G oder dgl. an bekannten Positionen in den Straßenbelag D zu integrieren. Dieser Straßenbelag D soll mit möglichst hoher Maschineneffizienz und einer vorbestimmten, möglichst gleichförmigen hohen Qualität (Ebenheit, Oberflächengüte, Oberflächenhomogenität, Verdichtungsgrad) eingebaut werden.

Zur Einstellung des den Straßenbelag D einbauenden Straßenfertigers und zum Einrichten vor Einbaubeginn oder während des Einbaubeginns weist der in Fig. 2 angedeutete Straßenfertiger M einen Bordrechner 1 auf, der mit einer Sensorik 2 und einer Aktorik 3 verbunden ist und, beispielsweise, mit einem Telematikmodul 16 kommunikationsfähig ausgelegt ist. In dem Bordrechner 1 ist ein Speicher 4 für Kennzahlen (Maschineneffizienz- und Straßenbelagsqualitäts-Kennzahlen) implementiert, dem eine Sektion 7 zur Ermittlung von Kennzahlen zugeordnet ist, wie auch eine Anzeigesektion 8. Ferner ist ein Hauptspeicher 5 für Maschinenparameter zumindest eines vorab erstellten Parametersatzes PS an Maschinenparametern implementiert, dem ein Speicher 6 für von der Sensorik 2 ermittelte Ist-Maschinenparameter vorgeschaltet, und eine Abrufsektion 17 für gespeicherte Maschinenparameter nachgeschaltet ist. Über die Abruf- und gegebenenfalls Vergleicher-Sektion 17 wird die Aktorik 3 angesteuert, die hydraulisch und beispielsweis weitestgehend automatisch abgerufene Maschinenparameter am Straßenfertiger und/oder dessen Einbaubohle umsetzend einstellt. Als Maschinenparameter wird zumindest die Höhenpositionen der Nivellierzylinder benutzt. Eine Eingabesektion 9 ist zumindest an den Hauptspeicher 5 angeschlossen, um dort entweder Maschinenparameter einzugeben oder Modifikationen vorzunehmen. Ferner ist eine Sende/Empfangs-Sektion 10, 15 (gegebenenfalls zwei getrennte Sektionen) vorgesehen, die z.B. zur Kommunikation auf drahtlosem Weg mit dem Telematikmodul oder einem anderen Straßenfertiger oder einem Planungsbüro oder einem Verwaltungsserver (nicht gezeigt) nutzbar ist. Das Telematikmodul kann in Software-Version implementiert sein, entweder am Straßenfertiger oder getrennt vom Straßenfertiger.

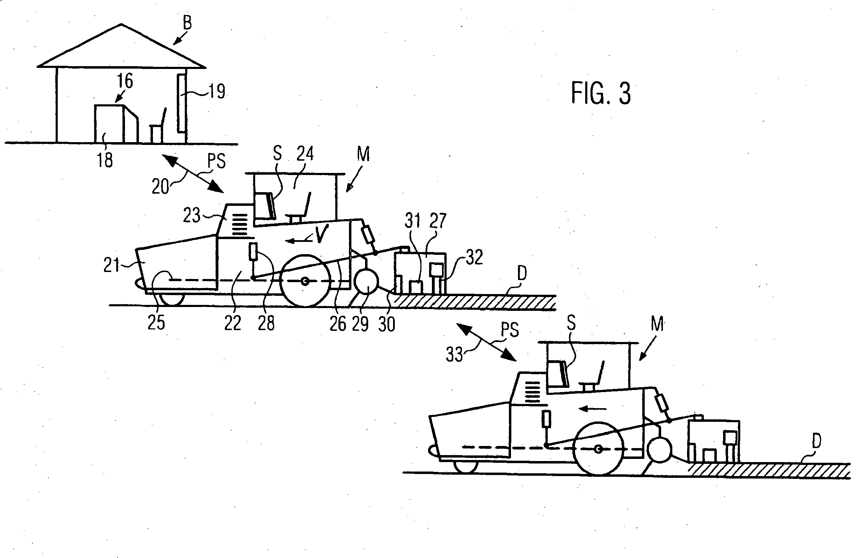

Fig. 3 verdeutlicht beispielsweise eine Baustelle A, auf der nebeneinander zwei Straßenfertiger M, M1 jeweils einen Straßenbelag D oder jeweils zumindest einen Teil eines Straßenbelags D einbauen. Der Baustelle A kann ein Planungsbüro B zugeordnet sein, das über eine Kommunikationsstrecke mit den Straßenfertigern M, M1 zu kommunizieren vermag, beispielsweise über Mobil- oder Betriebs- oder Satelliten-Funk oder über das Internet.

Im Planungsbüro B kann ein Verwaltungsserver 18 an einer Erstellungsstelle 16 für Parametersätze angeordnet sein, und sind abrufbare Informationen bei 19 beispielsweise bezüglich der Baustelle A, des Straßenbelags D, früherer Projekte, dem Verlauf des Straßenbelags und seiner Spezifikationen (siehe Fig. 1) bereitgehalten.

Beispielsweise im Planungsbüro B wird vorab (vor Einbaubeginn) ein Parametersatz PS an für die Maschineneffizienz und die Straßenbelagsqualität entscheidenden Maschinenparametern erstellt und über die Kommunikationsverbindung 20 an den jeweiligen Straßenfertiger M, M1 bzw. dessen Bordrechner in der Steuerung S übermittelt. Der vorab erstellte Parametersatz PS ist entweder so gestaltet, dass er anhand der im Planungsbüro B verfügbaren Informationen für die auch dort bekannten Einbauanforderungen des Straßenbelags hohe Maschineneffizienz und gute Straßenbelagsqualität verspricht, oder ist dies ein Parametersatz, der bereits bei einer zumindest ähnlichen früheren Einbauanforderung eines bereits eingebauten Straßenbelags hohe Maschineneffizienz und Straßenbelagsqualität erbracht hatte und dokumentiert ist.

Alternativ kann der zur Voreinstellung des Straßenfertigers M, M1 bei dessen Einrichtung verwendete Parametersatz PS auch auf dem jeweiligen Straßenfertiger M, M1 oder auf einem Straßenfertiger M oder M1 erstellt und umgesetzt werden. Wird der Parametersatz PS auf einem Straßenfertiger M oder M1 erstellt und dort umgesetzt, wird er zweckmäßig über eine Kommunikationsstrecke 33 an jeden weiteren Straßenfertiger übertragen, um auch dort umgesetzt zu werden. Die Kommunikationsstrecke 33 kann eine Kurzstreckenfunkstrecke (Bluetooth, W-LAN, Zigbee, oder ähnliches) sein. Alternativ könnte der jeweils erstellte Parametersatz PS auch über einen tragbaren Computer zum Straßenfertiger M, M1 gebracht und dort in den Bordrechner eingespielt werden, oder beispielsweise im Planungsbüro B auf einem USB-Stick oder ähnlichen tragbaren Speichern gespeichert werden, der zum Straßenfertiger M, M1 gebracht und dort zum Überspielen oder Aktualisieren angesteckt wird. Zum wahlweisen Abrufen besonders vorteilhafter Parametersätze (Best Practice) können diese auch in den Straßenfertigern gespeichert sein. Zusätzlich oder alternativ können die Parametersätze zusammen gegebenenfalls mit Kennzahlen und Basisinformationen, auf einem zentralen Server verwaltet werden, beispielsweise dem Verwaltungsserver 18 im Planungsbüro B.

Die baugleichen oder zumindest weitestgehend ähnlichen Straßenfertiger M, M1 weisen auf einem Chassis 22 einen Einbaumaterial-Bunker 21, ein Primärantriebsaggregat 23, einen Führerstand 24 mit der Steuerung S, einen Längsförderer 25 vom Bunker 21 zum hinteren Ende des Chassis 22, und am hinteren Chassisende eine Querverteilschnecke 29 für abgeworfenes Einbaumaterial auf. Eine Einbaubohle 27 ist über Zugholme 26 am Chassis 22 an Anlenkpunkten angekoppelt, die über Nivellierzylinder 28 in der Höhe verstellbar sind, und zum Einstellen des Angriffswinkels der Einbaubohle 27 und/oder quer zur Arbeitsfahrtrichtung unterschiedlicher Einbaustärke dienen. Die Einbaubohle 27 ist entweder eine Grundbohle mit fester Einbaubreite oder eine Ausziehbohle (nicht gezeigt) mit zur Variation der Einbaubreite quer verfahrbaren Ausziehbohlenteilen. In der Einbaubohle 27 ist zumindest ein Verdichtungsaggregat vorgesehen. Im gezeigten Ausführungsbeispiel ist ein Verdichtungsaggregat 30 ein Tamper, der mit einstellbarer Frequenz und einstellbarem Hub (Hub: manuell einstellbar oder fernsteuerbar verstellbar) am in Einbaufahrtrichtung (Einbaufahrtgeschwindigkeit V) vorderen Ende der Einbaubohle 27 arbeitet. Ferner kann ein nicht näher hervorgehobenes Glättblech an der Unterseite der Einbaubohle 27 eine Vibrationseinrichtung 31 (Unwuchtvibrationseinrichtung) tragen und ein weiteres Verdichtungsaggregat der Einbaubohle 27 definieren, dessen Frequenz verstellbar ist. Optional ist in der Einbaubohle 27 ferner sogar ein Hochverdichtungs-Pressleistensystem mit hydraulischer Druckbeaufschlagung in vertikaler Richtung als weiteres Verdichtungsaggregat 32 vorgesehen.

Die Höhenpositionen der Nivellierzylinder wird somit vorab erstellt. Andere mögliche Maschinenparameter des vorab erstellten Parametersatzes PS können sein: das Einbauprofil des Straßenbelags D (einschließlich der Einbauhöhe 13), die Einbaubreite 14, Einstellungen der Verdichtungsaggregate 30, 31, 32, die Geschwindigkeit oder Drehzahl des Längsförderers 25 und der Querverteilschnecke 29, die Einbauarbeitsgeschwindigkeit V, eine mögliche Bohlenentlastung, und dgl..

Um die Maschineneffizienz und Qualität des Straßenbelags D zu optimieren, ist es darüber hinaus hilfreich, zu den Maschinenparametern des vorab erstellten Parametersatzes PS Maschineneffektivitäts- und Straßenbelagsqualitäts-Kennzahlen zu ermitteln, wie beispielsweise den Massendurchsatz des Einbaumaterials in Tonnen pro Stunde, die Einbaustrecke pro Tag oder Arbeitsphase in Meter pro Stunde, wobei hier diese Vorgabe auch im Betrieb unvermeidliche Standzeiten des Straßenfertigers beinhalten kann, sowie Stand- und Wartezeiten in Minuten oder Stunden, wobei diese Kennzahlen beispielsweise beim Einbau oder früher in vergleichbaren Fällen ermittelt und dem vorab erstellten Parametersatz zugeordnet werden, beispielsweise zu Dokumentationszwecken, und auch, um den vorab erstellten Parametersatz für spätere Einsätze besser beurteilen zu können.

Als Straßenbelagsqualitäts-Kennzahlen können beispielsweise der Grad der Entmischung des Einbaumaterials auf der Lieferstrecke vom Mischwerk zum Straßenfertiger und/oder im Straßenfertiger und/oder die Oberflächenhomogenität oder -güte, die Gleichmäßigkeit der Einbauarbeitsgeschwindigkeit und/oder die Stand- und Wartezeiten beim Einbau ermittelt und dem Parametersatz zugeordnet werden. Schließlich können dem jeweils ermittelten Parametersatz auch Basisinformationen zugeordnet werden, die eine spätere richtige Auswahl erleichtern und die Verwaltung und Dokumentation begünstigen, wie den Typ des Straßenfertigers, den Typ der Einbaubohle, die Art und/oder Leistungsfähigkeit der Verdichtungsaggregate in der Einbaubohle, ein Name des Parametersatzes und ein Einsatzzweck.

Um zum Erstellen des jeweils passenden Parametersatzes diese Fülle an Informationen beurteilen und Vergleiche anstellen zu können, wird dies vorzugsweise im Planungsbüro vorgenommen, in welchem nicht nur entsprechend geschultes Personal verfügbar ist, sondern auch alle notwendigen Informationen zentral abrufbar sind. Dazu werden auch die Ist-Maschinenparameter, die am Straßenfertiger ermittelt werden, ins Planungsbüro übertragen, so dass an einer anderen Baustelle oder bei der Planung ähnlicher oder identischer Baustellen der jeweils vorab erstellte Parametersatz wieder zum Straßenfertiger oder an alle Straßenfertiger übertragen werden kann, um einen effektiven Maschineneinsatz für hohe Straßenbelagsqualität zu gewährleisten. Die Parametersätze sollten auch auf der Baustelle unter den Straßenfertigern M, M1 übertragen und jeweils abgespeichert werden. Dies kann dann zweckmäßig sein, wenn ein Straßenfertiger ausfallen sollte und ein anderer dessen Aufgabe zu übernehmen hat, oder wenn bei Betrieb mehrerer Straßenfertiger einer deutlich effektiver arbeitet oder qualitativ bessere Ergebnisse produziert.

Die Umsetzung des jeweiligen, vorab erstellten Parametersatzes zum Einrichten bzw. Voreinstellen am Straßenfertiger M, M1 kann auf unterschiedliche Weise erfolgen. Beispielsweise werden die Maschinenparameter manuell eingegeben und abgespeichert, wobei sie jederzeit manuell auslesbar und auf einer Anzeigesektion darstellbar sind. Der Straßenfertiger wird unter Berücksichtigen der abgespeicherten Maschinenparameter daraufhin manuell eingerichtet.

Alternativ können die Maschinenparameter des vorab erstellten Parametersatzes über die Sensorik 2 automatisch erfasst und dann abgespeichert werden. Zweckmäßig werden zuletzt verwendete Maschinenparameter automatisch abgespeichert.

Besonders zweckmäßig ist ein automatisiertes Einrichten des Straßenfertigers über die entsprechend ausgebildete und implementierte Aktorik 3, die Nivellierzylinder 28 sowie Hydraulik, wobei die Maschinenparameter automatisch ausgelesen und umgesetzt werden. So kann die Aktorik beispielsweise die Einbaufahrgeschwindigkeit V, die Drehzahl des Längsförderers 25 und der Querverteilschnecke 29 einstellen, aber auch die Frequenz und/oder den Hub des Verdichtungsaggregats 30, die Frequenz des Verdichtungsaggregats 31 und/oder die Frequenz oder den Hydraulikdruck des Verdichtungsaggregats 32, wie auch die Bohlenentlastung.

## Patentansprüche

1. Straßenfertiger (M, M1) zum Einbauen eines Straßenbelags (D) aus Einbaumaterial auf einer Baustelle (A), wobei der Straßenfertiger (M, M1) eine Steuerung (S) mit einem Bordrechner (1) und wenigstens einem Hauptspeicher (5) für Maschinenparameter eines vorab erstellten Parameterssatzes (PS) und wenigstens einen ersten, mit dem Hauptspeicher (5) verbundenden Speicher (4) für Maschineneffizienz- und Straßenbelags-Qualitätskennzahlen, sowie zumindest einen Längsförderer (25), eine Querverteilschnecke (29), eine Einbaubohle (27) mit Verdichtungsaggregaten (30, 31, 32) und Nivellierzylinder (28) für am Chassis des Straßenfertigers in der Höhe verstellbare Anlenkpunkte der Einbaubohle (27) aufweist, und zum Voreinstellen des Straßenfertigers (M, M1) vor Einbaubeginn auf eine vor Einbaubeginn ermittelte Anforderung des einzubauenden Straßenbelags (D) Maschinenparameter des Straßenfertigers auf die Maschinenparameter des vorab erstellten Parametersatzes (PS) abstimmbar sind, **dadurch gekennzeichnet, dass** mit dem Bordrechner (1) eine Sensorik (2) zum Ermitteln von Ist-Höhenpositionen der Nivellierzylinder (28) am Straßenfertiger (M, M1) als Ist-Maschinenparameter verbunden ist, dass die Steuerung (S) einen zweiten zumindest mit dem Hauptspeicher (5) verbundenen Speicher (6) für die von der Sensorik (2) ermittelten Ist-Höhenpositionen der Nivellierzylinder (28) und eine Abruf - und/oder Vergleichersektion (17) zum Vergleichen und Abrufen im Hauptspeicher (5) gespeicherter Maschinenparameter des vorab erstellten Parametersatzes (PS) und der im Speicher (6) gespeicherten, von der Sensorik (2) ermittelten Ist-Höhenpositionen der Nivellierzylinder (28) umfasst, und dass am Straßenfertiger (M, M1) eine von der Abruf- und/oder Verleichersektion (17) ansteuerbare hydraulische Aktorik (3) vorgesehen ist, mit der unter Berücksichtigung der gespeicherten Ist-Höhenpositionen der Nivellierzylinder (28) die im vorab erstellten Parametersatz (PS) enthaltenden Höhenpositionen der Nivellierzylinder (28) einstellbar sind.

2. Straßenfertiger nach Anspruch 1, **dadurch gekennzeichnet, dass** im Straßenfertiger (M, M1) eine Sende/Empfangs-Sektion (10, 15) vorgesehen und kommunikationsfähig mit einem Telematikmodul (16) verknüpft ist, vorzugsweise einem in einem Planungsbüro (B) und/oder einem Verwaltungsserver (18) von dem Straßenfertiger (M, M1) getrennt verfügbaren Telematikmodul (16).

3. Straßenfertiger nach Anspruch (1), **dadurch gekennzeichnet, dass** im Hauptspeicher (5) der Steuerung (S) des Straßenfertigers (M, .M1) oder in einem mit dem Straßenfertiger (M, M1) kommunizierenden Verwaltungsserver (18) mehrere unterschiedliche vorab erstellte Parametersätze (PS) gespeichert sind.

4. Straßenfertiger nach Anspruch (1), **dadurch gekennzeichnet, dass** in dem vorab erstellten Parametersatz (PS) auch die Verteilerschnecken-Höhenposition definiert ist.

## Claims

1. Paver (M, M1) for paving a road surface (D) from paving material on a construction site (A), the paver (M, M1) comprising a control (S) including an on-board computer (1) and at least one main store (5) for machine parameters of a parameter set (PS) created in advance and at least one first store (7) connected with the main store (5) for machine efficiency figures and road surface quality figures, as well as at least one longitudinal conveyor (25), a lateral distributing auger (29), a paving screed (27) including compacting aggregates (30, 31, 32) and leveling cylinders (28) for articulation points of the paving screed (25), which articulation points are height adjustable at a chassis of the paver, wherein for pre-setting the paver (M, M1) for a previously determined requirement of the road surface (D) that is to be paved, prior to the start of paving machine parameters of the paver are to be matched with the machine parameters of the parameter set (PS) created in advance, **characterized in that**, for obtaining actual height positions of the leveling cylinders (28) at the paver (M, M1) as actual machine parameters, the sensorics (2) is connected with the on-board computer (1), that the control (S) comprises a second store (6) at least connected with the main store (5) for storing the actual height positions of the leveling cylinders (28) obtained by a provided sensorics (2) and a retrieving and/or comparing section (17) for comparing and retrieving machine parameters of the parameter set (PS) created in advance and stored in the main store (5) and the actual height positions of the leveling cylinders (28) as obtained by the sensorics (2) and stored in the second store (6), and that a hydraulic actorics (3) controlled by the retrieving and/or comparing section (17) is provided at the paver (M, M1), by which hydraulic actorics (3), the height positions of the leveling cylinders (28) as contained in the parameter set (PS) created in advance are adjusted under consideration of the stored actual height positions of the leveling cylinders (28).

2. Paver according to claim 1, **characterized in that** an emitting/receiving section (10, 15) is arranged at the paver (M, M1) and is interlinked for communications with a telematics module (16), preferably with a telematics module (16), separately available from the paver (M, M1) in a planning office (B) and/or in an administrating server (18).

3. Paver according to claim 1, **characterized in that** several different parameter sets (PS) created in advance are stored either in the main store (5) of the control (S) of the paver (M, M1) or in an administrating server (18) communicating with the paver (M, M1).

4. Paver according to claim 1, **characterized in that** as well the height position of the lateral distribution auger (18) is defined in the parameter set (PS) created in advance.

## Revendications

1. Finisseur de route (M, M1) prévu pour l'application ou la pose d'un revêtement routier (D) en un matériau d'enrobé sur un chantier (A), le finisseur de route (M, M1) comprenant
une commande (S) avec un calculateur de bord (1) et au moins une mémoire principale (5) pour des paramètres de machine d'un jeu de paramètres (PS) établi au préalable, et au moins une première mémoire (4), reliée à la mémoire principale (5), pour des nombres caractéristiques de qualité de l'efficience de la machine et du revêtement routier,
ainsi qu'au moins un transporteur longitudinal (25),
une vis sans fin de distribution transversale (29),
une table de finisseur (27) avec des groupes de compactage (30, 31, 32) et des vérins de nivellement (28) pour des points d'articulation de la table de finisseur (27), réglables en hauteur sur le châssis du finisseur de route,
finisseur dans lequel pour assurer un préréglage du finisseur de route (M, M1) avant le début de la pose du revêtement, sur une exigence du revêtement routier (D) à poser déterminée avant le début de la pose, des paramètres de machine du finisseur de route peuvent être adaptés aux paramètres de machine du jeu de paramètres (PS) établi au préalable,
**caractérisé**
**en ce qu'**au calculateur de bord (1) est relié un ensemble de capteurs (2) destiné à déterminer des positions de hauteur réelles instantanées des vérins de nivellement (28) sur le finisseur de route (M, M1), en tant que paramètres de machine réels instantanés,
**en ce que** la commande (S) comprend une deuxième mémoire (6) reliée au moins à la mémoire principale (5) et destinée aux positions de hauteur réelles instantanées des vérins de nivellement (28) ayant été déterminées par l'ensemble de capteurs (2), et une section de comparaison et/ou de consultation (17) destinée à comparer et consulter des paramètres de machine du jeu de paramètres (PS) établi au préalable mémorisés dans la mémoire principale (5), et les positions de hauteur réelles instantanées des vérins de nivellement (28) détectées par l'ensemble de capteurs (2) et mémorisées dans la mémoire (6),
et **en ce que** sur le finisseur de route (M, M1) est prévu un ensemble hydraulique d'actionneurs (3) pouvant être commandé par la section de comparaison et/ou de consultation (17), et à l'aide duquel il est possible de régler les positions de hauteur des vérins de nivellement (28) contenues dans le jeu de paramètres (PS) établi au préalable, en tenant compte des positions de hauteur réelles instantanées mémorisées, des vérins de nivellement (28).

2. Finisseur de route selon la revendication 1, **caractérisé en ce que** dans le finisseur de route (M, M1) est prévue une section d'émission/réception (10, 15) qui est associée, sur le plan de la communication, à un module télématique (16), de préférence un module télématique (16) disponible de manière séparée du finisseur de route (M, M1), dans un bureau d'études (B) et/ou un serveur de gestion (18).

3. Finisseur de route selon la revendication 1, **caractérisé en ce que** dans la mémoire principale (5) de la commande (S) du finisseur de route (M, M1) ou dans un serveur de gestion (18) communiquant avec le finisseur de route (M, M1), sont mémorisés plusieurs jeux différents de paramètres (PS) établis au préalable.

4. Finisseur de route selon la revendication 1, **caractérisé en ce que** dans le jeu de paramètres (PS) établi au préalable est également définie la position de hauteur de la vis sans fin de distribution.
